# EUROPEAN PATENT APPLICATION

(11) **EP 2 017 597 A1**
(43) Date of publication of application: **21.01.2009**
(21) Application number: 07013895.3
(22) Date of filing: 16.07.2007
(51) Int. Cl.: G01N 1/02

(54) **Monitoring device and system of monitoring devices**

(71) Applicant: Paradigm Services Limited, 21 Holborn Viaduct EC1A 2DY London (GB)
(72) Inventor: Clements, Robert, London N6 4QX (GB)
(74) Representative: Hummel, Adam

(57) **Abstract**

Monitoring device comprising positioning means for determining a position of the device and analyzing means for measuring and analyzing substances and/or energy in environmental media.

## Description

### FIELD OF THE INVENTION

The present invention relates to a monitoring device and system which is capable of monitoring environmental parameters and reporting these parameters to a remote user or central command and/or alarming the remote user or central command, if the environmental parameters pass a given threshold.

### BACKGROUND TO THE INVENTION

There are a number of situations in which a device which can transmit environmental information to a base station may be useful. Particularly, such a device would be invaluable in a case of an environmental emergency where it may be necessary to deploy search and rescue units. Such situations may involve remote locations where standard mobile telephone network has no coverage, and other forms of radio communication lack sufficient range to any nearby assistance.

The oil and gas industry monitors its sites to detect chemical leaks. Currently, this is done by an engineer who has to go to each site with a laptop to extract analyzer results. This procedure of the prior art has several disadvantages. One of the main disadvantages is that the engineer is put at risk of chemical poisoning if one of the sites has a chemical leak. Another disadvantage is that this procedure is very expensive, because the engineer has to travel to the different sites for which he or she is responsible and can, therefore, only oversee a few sites.

Similar situations appear in war, in case of countermeasures against terrorisms or in cases of environmental protection/surveillance.

### OBJECT OF THE INVENTION

It is an object of the present invention to disclose a device and a system that is capable of monitoring environmental parameters and reporting these parameters to a remote user or central command and/or alarming the remote user and/or central command, if the environmental parameters pass a given threshold.

The object is solved by a monitoring device according to claim 1 and a monitoring system according to claim 22.

The present invention provides a monitoring device comprising positioning means for determining a position of the device and analyzing means for measuring and analyzing substances and/or energy in environmental media.

Preferably, the environmental media are selected from the group of air, water, soil or biologic media, the substances are selected from the group of chemical substances, and the energy is selected from the group of kinetic energy, thermal energy or electromagnetic energy. Each possible combination is disclosed.

Preferably, the monitoring device further comprises storing means for storing the position data and the analyzed environmental data and transmitting means wherein, in accordance with a setting command, retrieves the stored position data and the analyzed environmental data from the storing means and transmits the retrieved data.

Preferably, the setting command defines that the data has to be transmitted, if a predefined reporting period has passed.

Preferably, the setting command defines that the data has to be transmitted, if an environmental parameter of the analyzed environmental data passes a given threshold.

Preferably, the positioning means comprises a GPS receiver.

Preferably, the transmitting means transmits a terminal identifier.

Preferably, the transmitting means immediately retrieves the most recently stored position data and the most recently stored analyzed environmental data from the storing means and transmits this data.

Preferably, the transmitting means transmits the terminal identifier, the position data and the analyzed environmental data to a satellite of a satellite system which is capable of relaying communications between the monitoring device and a base station.

Preferably, the satellite system is the IRIDIUM system or Skynet.

Preferably, the monitoring device further comprises a rechargeable power source.

Preferably, the monitoring device further comprises a solar panel configured to recharge the power source.

Preferably, the monitoring device further comprises encrypting means for encrypting the terminal identifier, the position data and/or the analyzed environmental data before transmission.

Preferably, the encryption means encrypts the data according to the Advanced Encryption Standard.

Preferably, the monitoring device further comprises means for receiving a request from a satellite and, in response to receipt of the request, transmitting the terminal identifier, position data, and the analyzed environmental data.

Preferably, the monitoring device further comprises means for receiving a setting command from a satellite, wherein a main controller sets a periodicity of the transmission based on the setting command.

Preferably, the monitoring device further comprises means for receiving from a satellite a message and display means for displaying the message.

Preferably, the monitoring device further comprises means for monitoring the output of the power source, wherein the periodicity of the transmission is set dependent on the output of the power source.

Preferably, if the output of the power source is low, a time interval between transmissions is increased.

Preferably, the monitoring device further comprises means for comparing position data determined at intervals, wherein the periodicity of the transmission is set dependent on a change in the position data or the analyzed environmental data.

Preferably, if the device is determined to be moving by comparison of the position data, a time interval between transmissions is decreased.

The present invention also provides a monitoring system comprising a monitoring device and a base station which comprises receiving means for receiving the terminal identifier, position data and analyzed environmental data from a satellite; and contact means for contacting a first responder.

Monitoring system according to claim 37, wherein the contact means contacts the first responder (3a) by telephone or email.

Preferably, the contact means stores details of a plurality of responders and, if no response is received from the first responder, the contact means contacts a second responder.

Preferably, the base station comprises decryption means for decrypting received terminal identifier, position data and analyzed environmental data.

Preferably, the base station comprises means for transmitting a setting command to the monitoring device via a satellite, wherein the main controller sets the periodicity of the transmission based on the setting command.

Preferably, the base station comprises means for transmitting a request to the monitoring device via a satellite wherein, in response to receipt of the request, the monitoring device transmits the terminal identifier, position data and analyzed environmental data.

### DESCRIPTION OF THE DRAWINGS

Preferred embodiments of the present invention will now be described with reference to the drawings, in which:
Figure 1 illustrates a monitoring device in accordance with the present invention.
Figure 2 illustrates a monitoring system including a monitoring device in accordance with the present invention.

### DESCRIPTION OF THE MONITORING DEVICE

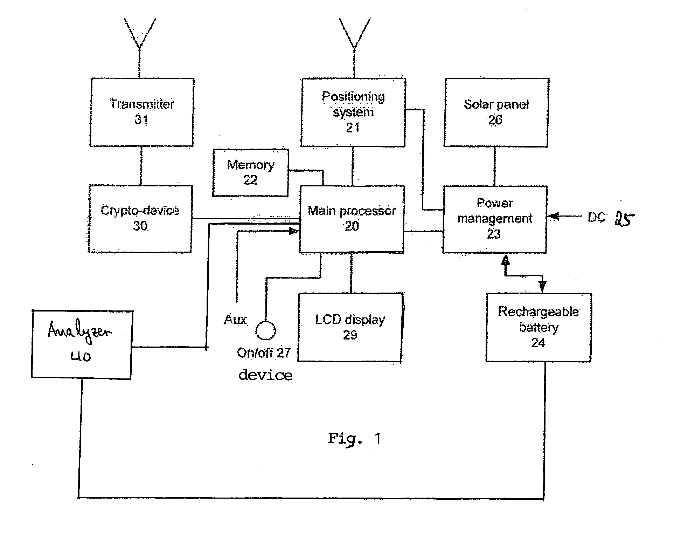

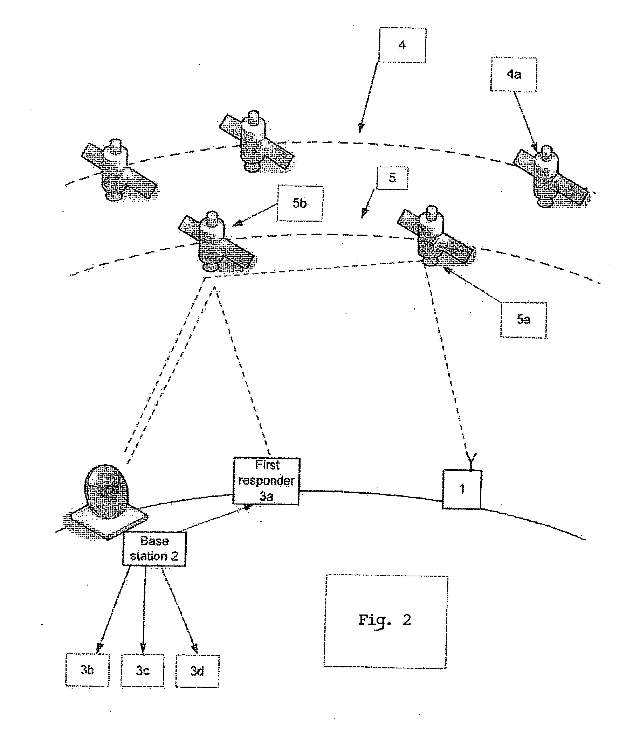

Fig. 1 illustrates a monitoring device (1) according to the invention. The monitoring device (1) comprises a main controller (20) and a positioning system (21). The positioning system (21) further comprises a receiver for the satellites of a General Navigation Satellite System (GNSS) (4) (shown in Fig. 2), e.g. a GPS receiver, which receives position data from a satellite (4a) of the GNSS (4) (shown in Fig. 2). The received position data is stored in a memory (22).

The monitoring device (1) further comprises a power management means (23). The monitoring device (1) is powered by a power source comprising a rechargeable battery (24). The rechargeable battery (24) (e.g. 6 V, 1.5 A) can be recharged via the power management means (23) from either a DC input (25) or a solar panel (26) mounted on the exterior of the monitoring device (1).

Fig. 1 further shows an on/off device (27) and a display (29), e.g., a LCD display. The display (29) may be covered by flip-up covers.

The on/off device (27) is located on the monitoring device (1). For one embodiment of the invention the on/off device (27) is implemented as a means that can be manually activated, e.g., as an on/off button. For this embodiment, the on/off button (27) may be covered by flip-up covers, e.g., to prevent accidental activation.

For another embodiment of the invention the on/off device (27) is implemented as a means that can be radio-controlled activated. The activation by radio-control prevents an accidental or unwanted or unauthorized activation or deactivation/stop of the monitoring device (1). This is important in situations where the monitoring device (1) is used, e.g., as an anti-terrorist device to monitor toxicity levels.

The monitoring device (1) further comprises encrypting means (30) and a transmitting means (31). The transmitting means (31) transmits messages to a satellite system (5) (shown in Figure 2) which is capable of relaying communications between the monitoring device (1) and a base station (2) or among the monitoring device (1) and other monitoring devices (1). For the satellite system (5) communication networks like the IRIDIUM satellite system or Skynet can be used. The present invention is, however, not limited to these systems. In the further description the IRIDIUM satellite system is used only as an example for such a system. The invention is not meant to be limited to the IRIDIUM satellite system or any other satellite system.

The main controller (20), the positioning system (21), the memory (22), the power management means (23), the encrypting means (30) and the transmitting means (31) may be implemented, e.g., on a Short Burst Data Transceiver and Processor Board or a Mini TIC or similar devices which are, for instance, connected by a ribbon cable and a 26 pin connection.

The monitoring device (1) further comprises an analyzer (40) which is connected to the rechargeable battery (24) or another power source. Further, the analyzer (40) is connected to the main controller (20), e.g. through an RS 232 Data Connection.

According to the invention different kinds of analyzers (40) can be used that can be applied to general environmental media like air, water, soil and biologic to monitor all kinds of substances found in these media, e.g., chemical or biological substances. A chemical substance is any material with a definite chemical composition within the phases of matter as solid, liquid, or gas. The present invention can also be applied to monitor different forms of energy in the media above, e.g., kinetic energy (e.g. sound), thermal energy (e.g. heat) and electromagnetic energy (e.g. light), volumetric motion in these general environmental media. The monitoring device (1) can also be used with a combination of analyzers (40) for being capable of monitoring an arbitrary combination of the environmental parameters indicated above.

Due to the different kinds of analyzers (40), the present invention can be used for a wide range of applications. One application of the present invention is to provide monitoring activities in the oil and gas industry, monitoring activities in war or monitoring activities for countermeasures against terrorism. Further, the present invention can be used for supporting environmental activities, e.g., implementing waste management policies of state organizations and/or private undertakings.

Considering that in many countries, pollution control efforts focus on each environmental medium separately, and that controls over marketing and use of substances are carried out as separate activities. The use of the monitoring system according to the invention could combine these activities and would enable countries (in a country or among countries) to practice an integrated pollution prevention and control (and environmental protection and management), taking into account the effects of activities and substances on the environment as a whole and the whole commercial and environmental life cycles of substances when assessing the risks they pose and when developing and implementing controls to limit their releases.

For one embodiment, the analyzer (40) is adapted to detecting toxicity levels of chemicals in the air. The invention is further described for this case. However, the invention is not limited to the medium air or to substances like chemicals in the air. For other embodiments, the analyzer (40) and the monitoring device (1) are adapted to other environmental media monitoring other substances or energy to be found in these media.

For this embodiment, where the analyzer (40) is adapted to detecting toxicity levels of chemicals in the air, typical applications for the monitoring device (1) and the analyzer (40) comprise the remote monitoring of fence line monitoring (toxic industrial gases, H2S, COS, methyl isocyanate, acrolein, acrylonitrile), environmental monitoring (pesticides, halogenated hydrocarbons, sulfur compounds, H2S), natural gas odorants (MES, H2S, mercaptans), indoor air quality monitoring (VOCs, MVOCs, solvents, formaldehyde), ambient air monitoring (toxic volatiles, solvents, halogenated hydrocarbons, industrial gases), leak detection (SF6, chlorinated hydrocarbons, toxic industrial compounds, solvents), detection of volatiles in food and pharmaceutical packaging (volatile fatty acids, geosmin, 2MIB), and threat & security (Chemical warfare agents, toxic industrial compounds).

### ACTIVATION OF THE MONITORING DEVICE

In one embodiment of the invention, a user or a central command of the monitoring device (1) can remotely activate the monitoring device (1) via the base station (2) (shown in Figure 2).

In each embodiment of the invention, the activation of the monitoring device (1) comprises the selection of transmission and reception frequencies, the networks the monitoring device (1) belongs to, and the headquarters the monitoring device (1) reports to. The data of the activation step are stored by the main controller (20) in the memory (22).

### SELECTION OF OPERATION MODES

After activation, a user or a central command of the monitoring device (1), e.g., one of the networks the monitoring device (1) belongs to or the headquarters of the monitoring device (1), can remotely select its operational modes via the base station (2) (setting command). With such a setting command it is also possible to define the reporting periods, the position update periods, and the analysis/measurement periods. The reporting periods determine the periods for transmitting analyzed/measured and stored toxicity levels of chemicals in the air. The position update periods determine the periods for updating the current position of the monitoring device (1), and the analysis/measurement periods determine the periods for analyzing/measuring the toxicity levels of chemicals in the air.

The monitoring device (1) can be used in at least three different operation modes. For each embodiment of the invention at least one of the three modes is implemented.

In a first mode, the monitoring device (1) receives position information from a satellite (4a) of the GNSS (4) and updates the position of the monitoring device (1) stored in memory (22) in accordance with the selected update period. Further, the monitoring device (1), on activation, periodically transmits in accordance with the selected reporting period a monitoring message to an IRIDIUM satellite (5a). The monitoring message comprises position data of the monitoring device (1), a terminal identifier, which identifies the particular monitoring device (1), and the most recently stored toxicity levels of various chemicals in the air. As stated above here and in all other places, the toxicity levels of various chemicals in the air are only mentioned as an example of environmental parameters. The invention is not limited to this case. The invention can be used for monitoring environmental parameters provided for instance by the substances and energy forms in the media indicated above.

In a second mode, the monitoring device (1) receives position information from a satellite (4a) of the GNSS (4) and updates the stored position of the monitoring device (1) in accordance with the selected update period. Further, the monitoring device (1), on activation, transmits an alarm message to an IRIDIUM satellite (5a), if the most recently stored toxicity levels of various chemicals in the air have passed a given threshold. These thresholds are also determined when the operation mode is selected. The alarm message comprises position data of the monitoring device (1), a terminal identifier, which identifies the particular monitoring device (1), and the indication (alarm) that the most recently stored toxicity levels of various chemicals in the air have passed a given threshold. On activation, the alarm message further comprises the most recently stored toxicity levels.

In a third mode, the monitoring device (1) receives position information from a satellite (4a) of the GNSS (4) and updates the stored position of the monitoring device (1) in accordance with the selected update period. Further, the monitoring device (1), on activation, not only transmits a monitoring message in accordance with the first mode, but also an alarm message in accordance with the second mode.

In all three modes, the transmitted messages (monitoring messages and/or alarm messages) also include a destination identifier, which allows the satellite (5a) to forward the data by relaying it, either directly or via one or more other satellite (5b) in the IRIDIUM system (5), to the base station (2).

The data of the operation mode step are stored by the main controller (20) in the memory (22).

### POSITION UPDATE

It is also disclosed that the monitoring device (1) can be used as a mobile device or as a stationary device. As a mobile device, the monitoring device (1) frequently changes its position. In this case, the monitoring device (1) is, e.g., carried by a person or placed in a vehicle such as a car, boat or airplane. As a stationary device, the monitoring device (1) is positioned in a fixed place, i.e., in this case the monitoring device (1) is moved only infrequently. The position update period is selected accordingly, i.e., more frequent in case of a mobile device and less frequent or only once in case of a stationary device.

In accordance with the selected position update period, the main controller (20) of the monitoring device (1) updates its position information. After receiving position data, the positioning system (21) sends the received data to the main controller (20). The main controller (20) stores the measured data in the memory (22).

### ANALYSIS/MEASUREMENT

In accordance with the selected analysis/measurement period, the analyzer (40) analyzes and measures toxicity levels of chemicals in the air. After the analysis/measurement of the toxicity levels in the air, the analyzer (40) sends the analyzed and measured data to the main controller (20). The main controller (20) stores the measured data in the memory (22).

### REPORTING

In accordance with the selected reporting period and the selected operation mode of the monitoring device (1), the main controller (20) of the monitoring device (1) provides monitoring and/or alarm messages.

If a monitoring message is to be provided (first or third mode), the main controller (20) recalls, in accordance with the selected reporting period, the most recently stored position data and measured data from the memory (22). The overall length of the character string is up to 155 characters in case of the IRIDIUM system. The character string comprises the position data and an additional character string for the measured data. The main processor adds a character string for the terminal identifier, and a destination identifier which identifies where the transmission is to be sent.

If an alarm message is to be provided (second or third mode), the main controller (20) performs the same operations as just described without consideration of the selected reporting period. In this case the main controller (20) is triggered if the most recently stored toxicity levels have passed a given threshold.

Independent of monitoring message or alarm message, the information is forwarded to the encryption means (30). The encryption means (30) carries out encryption on the data received from the main controller (20) (with exception of the destination identifier) in accordance with an encryption method, e.g., the advanced encryption standard (AES) and the encrypted data and the destination identifier is transmitted by the transmitting means (31) to the IRIDIUM satellite system (5).

In another embodiment, before transmitting the encrypted data and the destination identifier, the main controller (20) recalls duty cycle data from the power management means (23). The duty cycle can be set by the main controller (20) in accordance with the circumstances in which the monitoring device (1) is to be used.

The main controller (20) may be programmed to control the duty cycle by monitoring e.g. the position data stored in the memory (22) or the power output of the battery (24). The output of the battery may be monitored and, if the battery output is low, a time interval between transmissions may be increased. Thus the monitoring device (1) can automatically conserve battery power by reducing the number of transmissions. Also, the main processor can be programmed to compare the position data and/or the measured data on toxicity levels determined at time interval, wherein the periodicity of the transmission is set dependent on a change in the position data and/or the measured data on toxicity levels.

Thus, in general, the duty cycle data provides a means where, on activation, the monitoring device (1) can change the given reporting period.

After activation of the monitoring device (1) and selection of the operation mode, the processes of analysis/measurement, reporting, and position update can be executed in parallel as well as in a predefined sequence which is adapted to the current situation in which the monitoring device (1) works. Further, the user or the central command of the monitoring device (1) can select new operational modes including reporting periods, position periods, and analysis/measurement periods at all times or deactivate the monitoring device (1).

### MONITORING SYSTEM

Figure 2 illustrates a monitoring system comprising a monitoring device (1) which may be positioned in a fixed place or carried by a user or placed in a vehicle such as a car, boat or airplane, and a base station (2) for receiving transmissions from the monitoring device (1) and for contacting a first transponder (3a) and/or a plurality of further transponders (3b, 3c, 3d).

The monitoring device (1) is in communication with two satellite systems (4, 5). The first satellite system is an arbitrary GNSS (Global Navigation Satellite System) (4) for providing position information, e.g., the GPS satellite system. The second satellite system comprises a satellite system (5) capable of relaying communications between the monitoring device (1) and the base station (2). As stated above, for the second satellite system (5) communication networks like the IRIDIUM satellite system or Skynet can be used.

The indicated number of monitoring devices (1), base stations (2) and satellite systems (4, 5) is only for explanatory purposes. The present invention is not limited to the case of one monitoring device (1), one base station (2) and two satellite systems (4, 5); it can comprise one or multiple of each of these elements. Further, the present invention is not limited to the mentioned satellite systems like the GPS satellite system or the IRIDIUM satellite system or the Skynet. In the further description the IRIDIUM satellite system is used only as an example for such a system. The invention is not meant to be limited to the IRIDIUM satellite system or any other satellite system.

### OPERATION OF THE MONITORING SYSTEM

The monitoring device (1) periodically receives position information from a GNSS satellite (4a) and, on activation, periodically transmits monitoring data together with a terminal identifier which identifies the particular device to an IRIDIUM satellite (5a).

The transmitted data also includes a destination identifier which allows the satellite (5a) to forward the data by relaying it, either directly or via one or more other satellite (5b) in the IRIDIUM system (5), to the base station (2).

The base station (2) can contact the first and subsequent responders (3a-3b) by a number of means of communication. The base station (2) may contact the first responder (3a) by means of the IRIDIUM satellite system (5), or by telephone or email or radio communication. The base station (2) includes stored contact details for the responders (3a-3d), and sends a message first to the first responder (3a), including information identifying the monitoring device (1) which has been activated and its position determined from the received position data. If the base station (2) receives no response from the first responder (3a), then it contacts the second responder (3b). If no response is received from the second responder (3b), then the base station (2) retrieves details of, and contacts, a third responder (3c), and so on. Once one of the responders responds, the base station (2) opens communication with that entity and forwards future transmitted alarm and monitoring messages to that entity.

In another embodiment of the invention, the monitoring device (1) sends out all messages to the transponder (3a-3d) simultaneously. According to the invention there is no limit for the number of receivers of the messages sent by the monitoring device (1).

### OPERATIONS OF THE BASE STATION

The base station (2) may also send messages or commands to the monitoring device (1) via the IRIDIUM satellite system (5) once the monitoring device (1) has been activated.

The base station (2) may send a request for data at any time after activation of the monitoring device (1). When the monitoring device (1) receives a request of the base station (2), it immediately responds by transmitting the most recently stored position data and measured data on toxicity levels and its terminal identifier to the base station (2) via the IRIDIUM satellite system (5).

The base station (2) may also send setting commands for the operation mode including the analysis/measurement, reporting, and position update periods commanding the monitoring device (1) to reset the operation mode, the analysis/measurement period, the reporting period, and the position update periods, respectively. Thus if, for some reason, a receiving party decides that more or less frequent data from the monitoring device (1) is required, they can control the reporting period of the monitoring device (1) accordingly.

For embodiments of the invention where the monitoring device (1) provides a display (29), the base station (2) may also send messages to the monitoring device (1), which may be displayed on the display (29). Therefore, the monitoring device (1) can receive messages from the receiving party.

Both the base station (2) and the monitoring device (1) may be programmed with anti-spam and anti-spoof software to preclude unauthorized access.

## Claims

1. Monitoring device comprising
positioning means (21) for determining a position of the device and
analyzing means (40) for measuring and analyzing substances and/or energy in environmental media.

2. Monitoring device according to claim 1, wherein the environmental media are selected from the group of air, water, soil or biologic media, wherein the substances are selected from the group of chemical substances and wherein the energy is selected from the group of kinetic energy, thermal energy or electromagnetic energy.

3. Monitoring device according to one of the preceding claims further comprising
storing means (22) for storing the position data and the analyzed environmental data and
transmitting means (31) wherein, in accordance with a setting command, retrieves the stored position data and the analyzed environmental data from the storing means (22) and transmits the retrieved data.

4. Monitoring device according to claim 3, wherein the setting command defines that the data has to be transmitted, if a predefined reporting period has passed.

5. Monitoring device according to claim 3, wherein the setting command defines that the data has to be transmitted, if an environmental parameter of the analyzed environmental data passes a given threshold.

6. Monitoring device according to any one of the preceding claims, wherein the positioning means (21) comprises a GPS receiver.

7. Monitoring device according to any one of the claims 3 to 6, wherein the transmitting means (31) transmits a terminal identifier.

8. Monitoring device according to any one of the claims 3 to 7, wherein the transmitting means (31) immediately retrieves the most recently stored position data and the most recently stored analyzed environmental data from the storing means (22) and transmits this data.

9. Monitoring device according to claims 7 or 8, wherein the transmitting means (31) transmits the terminal identifier, the position data and the analyzed environmental data to a satellite (5a) of a satellite system (5) which is capable of relaying communications between the monitoring device (1) and a base station (2).

10. Monitoring device according to claim 9, wherein the satellite system (5) is the IRIDIUM system or Skynet.

11. Monitoring device according to any one of the preceding claims further comprising a rechargeable power source (24).

12. Monitoring device according to any one of the preceding claims further comprising a solar panel (26) configured to recharge the power source (24).

13. Monitoring device according to any one of the preceding claims further comprising encrypting means (30) for encrypting the terminal identifier, the position data and/or the analyzed environmental data before transmission.

14. Monitoring device according to claim 13, wherein the encryption means (30) encrypts the data according to the Advanced Encryption Standard.

15. Monitoring device according to any one of the preceding claims further comprising means for receiving a request from a satellite (5a) and, in response to receipt of the request, transmitting the terminal identifier, position data, and the analyzed environmental data.

16. Monitoring device according to any one of the preceding claims further comprising means for receiving a setting command from a satellite (5a), wherein a main controller (20) sets a periodicity of the transmission based on the setting command.

17. Monitoring device according to any one of the preceding claims further comprising means for receiving from a satellite (5a) a message and display means for displaying the message.

18. Monitoring device according to claims 11 or 12 further comprising means for monitoring the output of the power source (24), wherein the periodicity of the transmission is set dependent on the output of the power source (24).

19. Monitoring device according to claim 18, wherein, if the output of the power source (24) is low, a time interval between transmissions is increased.

20. Monitoring device according to any one of the preceding claims further comprising means for comparing position data determined at intervals, wherein the periodicity of the transmission is set dependent on a change in the position data or the analyzed environmental data.

21. Monitoring device according to claim 20, wherein, if the device is determined to be moving by comparison of the position data, a time interval between transmissions is decreased.

22. Monitoring system comprising a monitoring device according to any one of the preceding claims, and a base station (2) comprising receiving means for receiving the terminal identifier, position data and analyzed environmental data from a satellite (5b); and contact means for contacting a first responder (3a).

23. Monitoring system according to claim 22, wherein the contact means contacts the first responder (3a) by telephone or email.

24. Monitoring system according to claim 22 or 23, wherein the contact means stores details of a plurality of responders (3a-3d) and, if no response is received from the first responder (3a), the contact means contacts a second responder (3b-3d).

25. Monitoring system according to one of the claims 22 to 24, wherein the base station (2) comprises decryption means (30) for decrypting received terminal identifier, position data and analyzed environmental data.

26. Monitoring system according to one of the claims 22 to 25, wherein the base station (2) comprises means for transmitting a setting command to the monitoring device (1) via a satellite (5a, 5b), wherein the main controller (20) sets the periodicity of the transmission based on the setting command.

27. Monitoring system according to one of the claims 22 to 26, wherein the base station (2) comprises means for transmitting a request to the monitoring device (1) via a satellite (5a, 5b) wherein, in response to receipt of the request, the monitoring device (1) transmits the terminal identifier, position data and analyzed environmental data.
